# EUROPEAN PATENT APPLICATION

(11) **EP 2 682 000 A1**
(43) Date of publication of application: **08.01.2014**
(21) Application number: 12754474.0
(22) Date of filing: 02.03.2012
(51) Int. Cl.: A23C 9/13

(54) **FERMENTED MILK WITH IMPROVED FLAVOR AND METHOD FOR PRODUCING SAME**

(30) Priority: 04.03.2011 JP 2011048008
(71) Applicant: Meiji Co., Ltd., Koto-ku Tokyo 136-8908 (JP)
(72) Inventor: KAWAI, Yoshitaka, Odawara-shi Kanagawa 250-0862 (JP)
(74) Representative: Zech, Stefan Markus
(86) International application number: PCT/JP2012/055327
(87) International publication number: WO 2012/121131

(57) **Abstract**

The purpose of the present invention is to improve the flavor of a fermented milk by employing a lactose degradation step and, further, adding a whey powder to a starting material to thereby control the balance between the sweetness and sourness of the fermented milk. A method for producing a fermented milk, said method comprising a step for adding a whey powder to a starting milk and a step for degrading lactose in the starting milk by a lactase. By use of the production method according to the present invention, a fermented milk, which can be appropriately taken without using a sweetener such as sucrose and has a novel flavor, can be obtained.

## Description

### [Technical Field]

The present invention relates to a method for improving the flavor of fermented milk.

### [Background Art]

Several methods for improving flavor and quality of food products such as fermented milk have been conventionally investigated. A method to solve problems of additives has been disclosed (Patent Document 1), in which release of flavors from food products is prevented and unusual taste and odor are masked by addition of whey protein, etc. In addition, in order to solve problems of texture, etc. caused by addition of a stabilizer, a method of adding whey powder and whey protein concentrate in raw materials of fermented milk has been disclosed (Patent Document 2). These improvement methods mainly aim at improving the deterioration of quality of food products such as fermented milk caused by additives, etc.

Meanwhile, as a method for improving flavors possessed by fermented milk, a method to increase sweetness provided by fermented milk has been investigated. Sweetness of fermented milk is generally given to fermented milk by addition of sugar such as granulated sugar after fermentation. However, it is possible to increase the sweetness of fermented milk by degradation of lactose into monosaccharides, i.e., glucose and galactose, using lactase.

For example, in Patent Document 3, a fermented milk having less lactose content with increased sweetness due to lactase has been disclosed, and in Patent Document 4, a method for manufacturing fermented milk having undergone lactose degradation that can keep taste and quality by deoxidation treatment of ingredient milk has been disclosed.

### [Citation List]

### Patent Documents

Patent Document 1: JP B 3272453
Patent Document 2: JP A 6-14708
Patent Document 3: JP B 3389377
Patent Document 4: WO2010/098086

### [Disclosure of Invention]

### Problems to Be Solved by the Invention

However, even with the production method of fermented milk which includes a step of the above-described lactose degradation processing, an increment in sweetness is limited, and the issue of flavor improvement in fermented milk has not been resolved.

Therefore, an object of the present invention is to provide a method for improving flavors of fermented milk, and a fermented milk having improved flavor.

### Means for Solving the Problems

In view of the problems of the prior art, the present inventors have devoted themselves to research and found that, in the production method of fermented milk comprising a step of degrading lactose in a raw-material milk by lactase, by means of blending a whey powder into a raw material, the balance between sweetness and acidity of the fermented milk is adjusted, and thus the present inventors have completed the present invention. Further, it was also found that fermented milk having a novel flavor, which can be ingested suitably without using sweeteners such as sugar, etc., can be obtained using the production method of fermented milk of the present invention.

Namely, the present invention provides the following [11 - [8].
[1] A method for producing a fermented milk, comprising a step of blending a whey powder into a raw-material milk, and a step of degrading the lactose in the raw-material milk by lactase.
[2] The method according to [1], wherein the amount of the whey powder is from 1.0 wt% or more to 4.0 wt% or less.
[3] The method according to [1] or [2], wherein the whey powder has a lactose content of 65 wt% or more to 95 wt% or less, and a whey protein content of 5.0 wt% or more to 20 wt% or less.
[4] The method according to any one of Claims [1] to [3], wherein the amount of lactose in the raw-material milk is from 5.0 wt% or more to 9.0 wt% or less, and/or the lactose degradation rate is from 30% or more to 100% or less.
[5] A fermented milk produced by the method according to any one of [1] to [4].
[6] The fermented milk according to Claim 5, wherein the glucose content is from 0.5 wt% or more to 4.0 wt% or less, and pH is from 3.8 or more to 5.5 or less.
[7] The fermented milk according to [5] or [6], wherein the fermented milk is a yogurt drink.
[8] The fermented milk according to any one of [5] to [7], wherein no sweetener is added.

### Advantageous Effects of Invention

In accordance with the production method of fermented milk of the present invention, sweetness of the fermented milk is enhanced by degrading, using lactase, lactose in a raw-material milk into glucose and galactose that are sweeter than lactose. Furthermore, it is possible to bring out more sweetness by adding whey powder to the raw-material milk, because lactose contained in the whey powder is degraded by lactase. In addition, because lactose is basically degraded, problems relating to lactose intolerance are less likely to occur.

Furthermore, since whey powder contains high concentration of salts such as potassium salt and sodium salt, a sourness-masking effect by salts can be expected and sweetness can be brought out effectively. Also, due to the unique flavor of whey protein, it is possible not only to increase sweetness, but also to suppress sourness; namely, it is possible to simultaneously adjust the balance between sweetness and sourness of the fermented milk. Since even a small quantity of whey powder can exert its effects, addition of a whey powder in the fermented milk does not adversely affect the quality of products.

In addition, as compared to conventional lactose degradation processing, production of fermented milk with sufficient sweetness in a short time becomes possible.

In addition, since the sweetness/sourness balance of the fermented milk of the present invention is superior to that of the conventional production method, yogurt drinks in which sweetness is more preferred than sourness can be provided without addition of a sweetener after fermentation.

Furthermore, using hard-type yogurt that has strong sourness and therefore that had been hardly used for yogurt drinks, it becomes possible to produce palatable yogurt drinks without addition of sweeteners. Therefore, the present invention enables to provide palatable yogurt drinks having novel flavors with adjusted balance between sweetness and sourness, without addition of sweeteners.

### [Description of Embodiments]

The production method of a fermented milk of the present invention comprises a step of blending a whey powder into a raw-material milk (whey-powder blending step), and a step of degrading the lactose in the raw-material milk using lactase (lactose degradation step).

### Fermented milk

In the present specification, "fermented milk" includes "fermented milks", "dairy product/lactic acid bacteria beverages", and "lactic acid bacteria beverages" defined in the Ministerial Ordinance on Milk and Dairy products Concerning Compositional Standards, etc. (Ministerial Ordinance on Milk, etc.), and it also includes yogurts, etc.

For example, fermented milk refers to milk such as raw milk, cow's milk, special milk, raw goat milk, sterilized goat milk, raw sheep milk, component adjustment milk, low fat milk, non-fat milk and processed milk, or milk and others that contain non-fat milk solid equal to or greater than that of the milk, which is fermented with lactic acid bacteria or yeasts, then made into a paste or liquid condition, or a frozen product thereof; fermented milk includes hard yogurt, soft yogurt (paste-like fermented milk) or yogurt drinks (liquid fermented milk).

Preferred fermented milk in the present invention is a yogurt drink. Generally, hard yogurt such as plain yogurt is produced by filling a raw material in a container, then fermenting the material (after-fermentation). On the other hand, soft yogurt and yogurt drinks are produced by performing atomization or homogenization treatment of already-fermented milk, then filling them in a container (pre-fermentation).

### Raw-material milk

"Raw-material milk" serves as raw materials for fermented milk such as yogurt, and is also referred to as a yogurt mix or fermented-milk mix. In the present invention, it is possible to use known raw-material milks as appropriate. Raw-material milk includes both of those before sterilization and those after sterilization.

Specific raw materials of the raw-material milk may include water, raw milk, sterilized milk, skim milk, whole milk powder, skim milk powder, butter milk, butter, cream, whey protein concentrate (WPC), whey protein isolate (WPI), α-lactalbumin (La), and β-lactoglobulin (Lg), etc. Pre-warmed gelatin may be added as appropriate. Lactose may be appropriately degraded by the addition of lactase in advance. Raw-material milk is known and can be prepared in accordance with known methods.

As used herein, % means weight percent (w/w).

Preferred raw materials in the present invention include raw milk, skim milk and cream, but they are not limited thereto. The raw-material milk used in the present invention has a solid non-fat content of preferably 6.0%-10.0% inclusive, more preferably 7.0%-9.0% inclusive. In addition, the fat content is preferably 0.5%-4.0% inclusive, more preferably 1.0%-3.0% inclusive.

In addition, raw materials before fermentation comprise lactose at preferably 4.0%-10.0% inclusive, more preferably 5.0%-9.0% inclusive.

Raw materials, apparatuses and production conditions for producing fermented milk are disclosed in JP A 2004-180526, JP A 2005-176603, JP A 2006-288309, US Patent No. 6025008, US Patent No. 5482723, US Patent No. 5096731, U.S. Patent No. 4938973 and others. For example, as an apparatus for producing fermented milk, for after-fermentation products, a fermentation chamber to carry out fermentation after filling may be used, and for before-fermentation products, a fermentation tank to carry out fermentation, a line filter and a homogenizing machine for crushing the fermented milk curd may be used; regarding the production conditions, a deoxygenator may be appropriately adopted.

In one embodiment of the present invention, the production step of fermented milk includes a deoxidation step to deoxidize the raw-material milk. For example, deoxidation step is a step to remove oxygen existing in the raw-material milk by mixing inert gas into the raw-material milk, or by degassing under low pressure or in vacuum. By this step, oxygen is removed and furthermore, protein may be presumably protected.

In the deoxidation step, for example, a known apparatus for replacing dissolved oxygen in the raw-material milk with inert gas may be used appropriately; thus, oxygen dissolved in a raw-material milk can be removed by the inert gas. Such known apparatuses are also disclosed in JP A 2001-78665, JP A 2001-9206, and JP A 2005-110527.

"Inert gas" may be a gas such as nitrogen, in addition to noble gases such as helium, neon, argon, and xenon.

Incidentally, instead of mixing an inert gas, dissolved oxygen in the raw-material milk may be removed by degassing. Such a degassing device is also disclosed in JP A 2002-370006, or in JP A 2005-304390.

The deoxidation step may be carried out until the amount of oxygen dissolved in the raw-material milk (dissolved oxygen concentration, DO) becomes 5.0 ppm or less, preferably 3.0 ppm or less, and more preferably 2.0 ppm or less.

### Whey-powder blending step

"Whey-powder blending step" is a step in which a whey powder is blended or added into a raw-material milk. As used herein, the term "whey powder" includes the following: a milk fermented with lactic acid bacteria, or a milk to which an enzyme or acid is added to make a whey, from which most of the moisture is removed, then triturated. Whey is, for example, a water-soluble component that remains in the cow' s milk after fat, casein and lipid-soluble vitamins are removed. Whey generally refers to cheese whey or rennet whey (or also referred to as sweet whey) obtained as a by-product upon production of natural cheese or rennet casein; it also refers to casein whey and quark whey (or also referred to as acid whey) obtained upon production of acid casein or quark from skim milk. Main components of the whey are protein (β-lactoglobulin, α-lactalbumin, etc.), lactose, water-soluble vitamins, salts (mineral components).

"Whey-related products" include the following: whey concentrate obtained by concentration of a whey; whey powder obtained by drying a whey, whey protein concentrate (also referred to as WPC) obtained by concentration of major proteins of a whey with ultrafiltration method, etc., then drying; defatted WPC (low fat and high protein) obtained by removing fats from a whey with microfiltration (MF) method or centrifugation method, then concentration by UF method and drying; whey protein isolate (also referred to as WPI) obtained by selective fractionation of major proteins of a whey by ion exchange resin and gel filtration, then drying; desalted whey obtained by desalting a whey with nanofiltration (NF) or electrodialysis, then drying; mineral-concentrated whey obtained by precipitation of mineral components derived from a whey, then concentration by centrifugation, etc.

In addition, it is possible to add a composition comprising whey or whey components so that the formulation becomes identical to that of the whey powder. For example, a whey concentrate that is a whey concentrated and made into a solid form may be used. It is also possible to use a whey protein concentrate, that is a lactose-removed whey from which most of the moisture is removed then triturated.

In the present invention, whey powder is preferably used. Whey powder is blended in the raw-material milk in a ratio of preferably 1.0%-4.0% inclusive, more preferably 1.5%-3.0% inclusive. Furthermore preferably, it is blended in a ratio of 1.7%-2.8% inclusive, more preferably 1.8%-2.3% inclusive. When the blending amount of the whey powder is large, sweetness derived from lactose is sensed strongly, and at the same time, flavors of whey proteins and saltiness derived from the whey powder are significantly generated, resulting in the deterioration of the flavor of fermented milk; accordingly, an effect to induce subtle sweetness intended by the present invention is weakened. In addition, when the blending amount of a whey powder is large, astringency derived from whey proteins is strongly sensed, and therefore product quality is often adversely affected; whereas when the blending amount is too small, the effect of adjusting sweetness and sourness is hardly expected.

The whey powder used in the present invention may be a sweet whey powder, desalted whey powder and concentrated whey powder, and sweet whey powder is preferably used. Furthermore, these may be used in combination, and commercially available whey powders may be used.

Regarding the composition of components of the whey powder used in the present invention, the solid content is preferably 90%-100% inclusive, more preferably 95%-100% inclusive. In addition, the content of whey protein is preferably 5.0%-20% inclusive, more preferably 10%-15% inclusive. In addition, the content of lactose is preferably 65%-95% inclusive, more preferably 70%-90% inclusive. The ash content is preferably 1%-15% inclusive, more preferably 5%-10% inclusive.

Furthermore, sodium is preferably contained in an amount of 300 mg-1200 mg inclusive per 100 g of whey powder, and more preferably 500 mg-1000 mg inclusive. In addition, potassium is preferably contained in an amount of 1500 mg-4000 mg inclusive per 100 g of whey powder, and more preferably 2000 mg-3000 mg inclusive.

Moreover, as mentioned above, a whey or a composition comprising the whey component may be added such that equal formulation is achieved.

### Fermentation step

To produce fermented milk, raw-material milk is fermented. Fermentation step of raw-material milk may be two-stage fermentation, etc. Fermented milk with a commercial value can be obtained through the fermentation step. In the present invention, preferably, fermentation is carried out by blending a starter to raw-material milk.

As a starter, known starters may be appropriately used. Preferable starters include lactic acid bacteria starter, and as the lactic acid bacteria starter, in addition to Lactobacillus bulgaricus (L. bulgaricus), Streptococcus thermophilus (S. thermophilus), Lactobacillus lactis (L.lactis), Lactobacillus gasseri (L gasseri) or Bifidobacterium, one or more kinds selected from lactic acid bacteria and yeasts that are generally used for production of fermented milk may be used.

Among these, a starter based on the mixed starter of Lactobacillus bulgaricus (L. bulgaricus) and Streptococcus thermophilus (S. thermophilus) that are standardized as yogurt starters in accordance with the Codex Alimentarius international food standards is preferred. Using this yogurt starter as a base, other lactic acid bacteria such as Lactobacillus gasseri (L gasseri) and Bifidobacterium may be added as well, depending on the fermented milk to be obtained. As the amount of addition of starters, the amount adopted in known production methods of fermented milk may be appropriately adopted. The inoculation method of starters may be in accordance with a known method used for the production of fermented milk.

### Lactose degradation step

"Lactose degradation step" is a process wherein lactose is broken down by lactase. Lactase may be added at any stage of the production process. Lactase may be added to raw-material milk and/or whey powder.

In general, from the viewpoint of reducing the risk of bacterial contamination, heat sterilization is carried out to inactivate or kill the enzymes after degradation of lactose at low temperature, and fermentation is promoted thereafter.

Meanwhile in the present invention, it is possible that in the fermentation step, a starter and lactase may be mixed into a yogurt mix (raw-material milk) and they are subjected to fermentation while enzymes are in an activated condition. Here, lactose, etc. contained in the raw-material milk is degraded, resulting in the generation of acid to inactivate the enzymes. Owing to such treatment, lactose degradation rate can be effectively increased.

In addition, when fermentation is carried out by mixing a starter and lactase into the raw-material milk, because it is not necessary to promote enzymatic reaction before high-temperature heat sterilization, production process of fermented milk can be simplified, and flavors inherent to fermented milk can be maximally brought out. Moreover, since such a treatment enables to effectively increase the lactose degradation rate, separate control of the lactose degradation rate and degree of fermentation (change in acidity) is not necessary, and the product control can be extremely simplified.

Therefore, in the present invention, lactase is preferably added to raw-material milk together with a starter. However, lactase may be added before addition of a fermentation starter, or may be simultaneously with, or after addition of a fermentation starter. When the raw-material milk to which lactase and a starter are mixed is used, lactose in the raw-material milk is degraded during the time course of the fermentation step.

In addition, lactase may be added before deoxidation step, or after deoxidation step.

Preferably, lactase in the present invention is an enzyme whose optimal pH of activity is in the neutral region, which inactivates in the acidic region, and which can degrade lactose at its activated condition. An example of such an enzyme is a lactase disclosed in Patent Document 3. Examples of the lactase include those of bacterial origin or yeast origin. Also, those wherein the optimal pH of activity is 6.3-7.5 inclusive and the pH for inactivation is 6.0 or more and 4.0 or less are included. Furthermore, as the lactase, a lactase derived from Kluyveromyces lactis or from Kluyveromyces fragilis is preferred. Lactase derived from Kluyveromyces lactis includes Kluyveromyces lactis itself, and a lactase derived from Kluyveromyces lactis. Incidentally, lactases are commercially available, and examples of commercially available lactase include Lactase F (Amano Enzyme Inc.), Lactoles L-3 (Daiwa Fine Chemicals Co. , Ltd.), and Lactoles L-10 (Daiwa Fine Chemicals Co., Ltd.).

### Fermentation and lactose degradation condition

Fermentation conditions such as fermentation temperature may be adjusted as appropriate in consideration of the type of lactic acid bacteria added to the raw-material milk and desired flavor of the fermented milk. One specific example is to maintain the temperature of a fermentation chamber (fermentation temperature) from 30°C or more to 50°C or less. At this temperature, lactic acid bacteria are usually active, and therefore fermentation can be promoted effectively. Fermentation temperature is, more preferably 40°C-45°C inclusive, and furthermore preferably 41°C-44°C inclusive.

Fermentation time may be appropriately adjusted depending on the type of starters and fermentation temperature; specifically, it is from 1 hr or more to 5 hr or less; it may be from 2 hr or more to 4 hr or less.

Furthermore, when the lactose degradation rate of raw materials is 65% or more, generally a fermented milk with good flavor can be obtained. However, according to the production method of the present invention, the balance between sweetness and sourness is adjusted by the addition of whey powder, and sufficient sweetness is obtained even if lactose degradation rate is low. Therefore, in the present invention, it becomes possible to employ the lactose degradation rate of 30% or more to 100% or less; however, in order to increase sweetness, it may be from 60% or more to 100% or less.

In addition, lactose degradation step of the raw material may be carried out before sterilization, or simultaneously with fermentation. In general, a temperature at the time of lactose degradation may be 0°C-55°C inclusive at which lactase maintains its activity, and preferably 30°C-50°C inclusive, and more preferably 40°C-45°C inclusive. When the lactose degradation time is 1 hr or more at a preferable temperature of common lactase from 40°C or more to 45°C or less, then the object can be achieved. However, according to the present invention, lactose degradation time can be shortened compared to conventional methods, and the lactose degradation time at 40°C or more to 45°C or less may be 15 min-1 hr inclusive, and preferably 30 min-45 min inclusive.

### Flavor of fermented milk

As used herein, "sweetness/sourness balance" is a term representing the balance of the strength between sweetness and sourness, which is also one of the indices of taste. "Adjustment of sweetness/sourness balance" refers to adjusting the sweetness/sourness balance within a preferable range, for example, improving conventional negative evaluation; and this includes adjustment of flavors by increasing or decreasing sweetness, and/or increasing or decreasing sourness.

Furthermore, adjustment of the sweetness/sourness balance is not necessarily associated all the time with changes in the physical properties that serve as indices of sweetness and sourness such as sugar content (sugar degree) and pH, or with changes in the indices of individual flavors such as sweetness and sourness in sensory tests, etc.

Evaluation of flavors of fermented milk of the present invention is determined by a sensory test, etc. For example, as an analytical sensory evaluation, discrimination-type tests such as two-point discrimination method, three-point discrimination method, and ranking method, may be used. In addition, description-type tests such as scoring method and profiling method may also be used, and quantitative descriptive analysis method (QDA) may also be used for the evaluation.

For example, in addition to the level of indices of flavors such as degree of sweetness and degree of sourness, the degree of sweetness/sourness balance can be evaluated with five-grade evaluation, as a relative evaluation to standard, or as an absolute evaluation. When trained panels are involved for example, at least 5 panels, normally from 10-15 (inclusive) panels can participate in the evaluation.

In one embodiment of the present invention, the sweetness/sourness balance of the fermented milk can be increased while maintaining indices of individual flavors such as sweetness and sourness.

Moreover, according to the present invention, texture of fermented milk can be lightened. Improvement of aftertaste and/or improvement of drinkability (Nodogoshi, i.e., a smooth and pleasant feeling of drink going down the throat) can also be realized particularly in yogurt drinks. Accordingly, it is possible to provide fermented milk with improved total flavor.

The fermented milk of the present invention is not limited but, can be provided as it is without addition of sugar (such as granulated sugar) as a sweetener other than raw materials. In addition, the present invention provides a novel palatable yogurt drink having well-balanced sweetness and sourness with improved flavor and texture of fermented milks.

The fermented milk of the present invention has a glucose content of preferably 0.5%-4.0% inclusive, more preferably 1.0%-3.0% inclusive, and furthermore preferably 1.5%-2.5% inclusive. In addition, a pH value that can serve as an index of sourness is preferably 3.8-5.5 inclusive, more preferably 4.0-5.0 inclusive, and furthermore preferably 4.3-4.8 inclusive.

### [Examples]

### Example 1

A fermented milk was produced using the following materials and the formulation shown in Table 1: a skim milk powder with 1% fat content, 34% protein and 54% lactose (product name: "Meiji skim milk powder", Meiji Co., Ltd.), cow's milk with 3.9% fat content, 3.2% protein and 4.7% lactose (product name: "Meiji Milk", Meiji Co., Ltd.), and a whey powder with 1.0% fat content, 12% protein, 76% lactose, 97% solid content, 8.6% ash content, 0.7% sodium, and 2.5% potassium (product name: "Meiji whey powder", Meiji Co., Ltd.). Lactic acid bacteria starters (2038 strains of Lactobacillus bulgaricus and 1131 strains of Streptococcus thermophilus isolated from "Meiji Bulgaria yogurt" (product name) from Meiji Co., Ltd.) and lactase (product name: "GODO-YNL", Godo Shusei Co., Ltd.) were simultaneously added, and the mixture was fermented at 43°C until pH value reached 4.4 (approximately 3 hr), and the fermented milk curd formed was crushed by a filter then cooled. As a comparative control, crude lactose (99.5% lactose content, product name: "LACTOSE GRANDEUR", FIRST DISTRICT ASSOCIATION) was used instead of the whey powder, the lactose content was adjusted to that in Example 1, and fermentation was carried out and the curd was crushed similarly to Example 1 to make Comparative example 1.

**[Table 1]**

| Blend ratio of raw materials (%) | Example 1 | Comparative example 1 |
|---|---|---|
| Cow's milk | 51 | 51 |
| Skim milk powder | 3.0 | 3.9 |
| Whey powder | 2.5 | - |
| Crude lactose | - | 1.4 |
| Lactic acid bacteria starter | 1 | 1 |
| Lactase | 0.02 | 0.02 |
| Raw material water | 42.48 | 42.68 |
| Total | 100 | 100 |

Composition and analysis values of Example 1 and Comparative example 1 shown in Table 1 are listed in Table 2. Here, the fat, protein mass, lactose and glucose contents, and lactic acid acidity were measured by Gerber method, Kjeldahl method, enzymatic method (F-kit: JK International) and titration method, respectively.

**[Table 2]**

| Composition | | Example 1 | Comparative example 1 |
|---|---|---|---|
| Fat | (g/100g) | 2.0 | 2.0 |
| Protein mass | (g/100g) | 3.0 | 3.0 |
| Lactose content (before fermentation) | (g/100g) | 5.9 | 5.9 (calculated value) |
| Lactose degradation rate (after fermentation) | (%) | 88 | 94 (measured value) |
| Glucose content (after fermentation) | (g/100g) | 1.7 | 1.6 (measured value) |
| pH (after fermentation) | | 4.4 | 4.4 |
| Lactic acid acidity (after fermentation) | (%) | 0.7 | 0.6 |

Table 3 shows results of sensory test (five-grade scoring) of samples of Example 1 and Comparative example 1 by 12 trained panels. The fermented milks were stored in a refrigerator for 1 day after production, stirred sufficiently before testing, then approximately 50 mL of the samples were used for the test. Regarding the degree of sweetness and sourness, the following five grades were used: strong (5), strongish (4), moderate (3), weakfish (2), and weak (1); regarding the evaluation of sweetness/sourness balance, Nodogoshi (as defined above) and aftertaste, the following five grades were used: good (5), goodish (4), moderate (3), badish (2), and bad (1) ; regarding the degree of texture, the following five grades were used for the evaluation: heavy (5), heavyish (4), moderate (3), lightish (2), and light (1).

**[Table 3]**

| Evaluation items | Evaluation criteria 5 <-> 1 | Example 1 | Comparative example 1 | Significant difference |
|---|---|---|---|---|
| Degree of sweetness | Strong <-> Weak | 2.67 | 2.33 | |
| Degree of sourness | Strong <-> Weak | 2.91 | 3.50 | ** |
| Sweetness/sourness balance | Good <-> Bad | 3.42 | 2.50 | ** |
| Degree of texture | Heavy <-> Light | 3.08 | 3.67 | ** |
| Nodogoshi | Good <-> Bad | 3.25 | 2.58 | ** |
| Aftertaste | Good <-> Bad | 3.42 | 2.67 | ** |

| | | | | |
|---|---|---|---|---|
| ** p<0.01 | | | | |

Although the samples of Example 1 and Comparative example 1 have similar pH values (serving as an index of sourness) and glucose contents (as a source of sweetness), significant differences were observed in the degree of sourness and the evaluation of the sweetness/sourness balance (p<0.01), indicating that due to the use of whey powder, improvement in sourness by efficient degradation of lactose and improvement in the sweetness/sourness balance are induced.

### Example 2

A fermented milk was produced using the following materials and the formulation shown in Table 4: a skim milk powder with 1% fat content, 34% protein and 54% lactose (product name: "Meiji skim milk powder", Meiji Co., Ltd.), cow's milk with 3.9% fat content, 3.2% protein and 4.7% lactose (product name: "Meiji Milk", Meiji Co., Ltd.), and a whey powder with 1.0% fat content, 12% protein, 76% lactose, 97% solid content, 8.6% ash content, 0.7% sodium, and 2.5% potassium (product name: "Meiji whey powder", Meiji Co., Ltd.). Lactic acid bacteria starters (2038 strains of Lactobacillus bulgaricus and 1131 strains of Streptococcus thermophilus isolated from "Meiji Bulgaria yogurt" (product name) from Meiji Co., Ltd.) and lactase (product name: "GODO-YNL", Godo Shusei Co., Ltd.) were simultaneously added, and the mixture was fermented at 43°C until pH value reached 4.4 (approximately 3 hr), and the fermented milk curd formed was crushed by a filter then cooled. As a comparative control, a skim milk powder was used instead of the whey powder and the lactose content was adjusted to that in Example 2, fermentation was carried out similarly to Example 2, and when pH reached 4. 7, the curd was crushed and cooled to make Comparative example 2.

**[Table 4]**

| Blend ratio of raw materials (%) | Example 2 | Comparative example 2 |
|---|---|---|
| Cow's milk | 51 | 51 |
| Skim milk powder | 3.2 | 6.0 |
| Whey powder | 2 | - |
| Lactic acid bacteria starter | 1 | 1 |
| Lactase | 0.02 | 0.02 |
| Raw material water | 42.78 | 41.98 |
| Total | 100 | 100 |

Composition and analysis values of Example 2 and Comparative example 2 shown in Table 4 are listed in Table 5.

**[Table 5]**

| Composition | | Example 2 | Comparative example 2 |
|---|---|---|---|
| Fat | (g/100g) | 2.0 | 2.0 |
| Protein mass | (g/100g) | 3.0 | 3.7 |
| Lactose content (before fermentation) | (g/100g) | 5.6 | 5.6 (calculated value) |
| Lactose degradation rate (after fermentation) | (%) | 88 | 94 (measured value) |
| Glucose content (after fermentation) | (g/100g) | 1.6 | 1.6 (measured value) |
| pH (after fermentation) | | 4.5 | 4.7 |
| Lactic acid acidity (after fermentation) | (%) | 0.6 | 0.7 |

Similarly to Example 1, sensory test by 12 trained panels (five-grade scoring) was performed for Example 2 and Comparative example 2; Table 6 shows the results.

**[Table 6]**

| Evaluation items | Evaluation criteria 5 <-> 1 | Example 2 | Comparative example 2 | Significant difference |
|---|---|---|---|---|
| Degree of sweetness | Strong <-> Weak | 2.73 | 2.64 | |
| Degree of sourness | Strong <-> Weak | 2.92 | 2.75 | |
| Sweetness/sourness balance | Good <-> Bad | 3.58 | 2.83 | ** |
| Degree of texture | Heavy <-> Light | 3.17 | 4.50 | ** |
| Aftertaste | Good <-> Bad | 3.58 | 2.67 | ** |

| | | | | |
|---|---|---|---|---|
| ** p<0.01 | | | | |

In the samples of Example 2, the pH value as an index of sourness is lower than that of Comparative example 2, and the glucose content as an index of sweetness is the same. Since a significant difference was observed in the sweetness/sourness balance from the results of sensory evaluation, an excellent fermented milk, i.e., the fermented milk that enables to maintain a good sweetness/sourness balance even when pH decreases, and has a small change in the flavor caused by a decrease in pH due to the characteristics of lactic acid bacteria during storage, can be provided by blending a whey powder.

### [Industrial Applicability]

The present invention relates to a method for improving flavors of fermented milk; the invention can provide fermented milk having mild sourness suitable for eating and drinking, without addition of a sweetener such as sugar.

## Claims

1. A method for producing a fermented milk, comprising a step of blending a whey powder into a raw-material milk, and a step of degrading the lactose in the raw-material milk by lactase.

2. The method according to Claim 1, wherein the amount of the whey powder is from 1.0 wt% or more to 4.0 wt% or less.

3. The method according to Claim 1 or 2, wherein the whey powder has a lactose content of 65 wt% or more to 95 wt% or less, and a whey protein content of 5.0 wt% or more to 20 wt% or less.

4. The method according to any one of Claims 1 to 3, wherein the amount of lactose in the raw-material milk is from 5.0 wt% or more to 9.0 wt% or less, and/or the lactose degradation rate is from 30% or more to 100% or less.

5. A fermented milk produced by the method according to any one of Claims 1 to 4.

6. The fermented milk according to Claim 5, wherein the glucose content is from 0.5 wt% or more to 4.0 wt% or less, and pH is from 3.8 or more to 5.5 or less.

7. The fermented milk according to Claim 5 or 6, wherein the fermented milk is a yogurt drink.

8. The fermented milk according to any one of Claims 5 to 7, wherein no sweetener is added.
